# DEMANDE DE BREVET EUROPEEN

(11) **EP 0 615 901 A1**
(43) Date de publication de la demande: **21.09.1994**
(21) Numéro de dépôt: 94400440.7
(22) Date de dépôt: 02.03.1994
(51) Int. Cl.: B64C 25/12, B64C 25/34

(54) **Train d'atterrissage d'aéronef, du type à relevage latéral**

(30) Priorité: 15.03.1993 FR 9302946
(71) Demandeur: MESSIER BUGATTI, F-78140 Velizy Villacoublay (FR)
(72) Inventeur: Derrien, Michel, F-78000 Versailles (FR); Hainaut, Jean-Pierre, F-94510 La Queue en Brie (FR)
(74) Mandataire: Jaunez, Xavier

(57) **Abrégé**

L'invention concerne un train d'atterrissage d'aéronef à relevage latéral.

Conformément à l'invention, la jambe (50) du train est formée d'un caisson rigide (10) articulé, et d'un balancier porteur de roues (12) pouvant tourner autour d'un axe (13) qui, en position train bas, est sensiblement perpendiculaire au plan longitudinal médian de l'aéronef, et un amortisseur (15) relie le caisson (10) au balancier (12). Le balancier (12) est en outre directement relié à un moyen de commande de pivotement (100) qui est agencé pour diminuer, lors du relevage du train, l'angle (A) que forment la direction du caisson et la direction du balancier, et inversement pour augmenter cet angle lors de la descente dudit train, en se conformant à une trajectoire prédéterminée.

## Description

L'invention concerne les trains d'atterrissage d'aéronef, du type à relevage latéral, et plus particulièrement un train comportant une jambe articulée sur une structure d'aéronef et équipée inférieurement d'un train de roues, et un vérin de manoeuvre assurant le pivotement de cette jambe autour de son axe.

On connaît de nombreux trains d'atterrissage à relevage latéral dans lesquels la jambe de train est montée pour tourner autour d'un axe qui est parallèle à l'axe central de l'aéronef, ladite jambe se présentant sous la forme d'un caisson d'amortisseur dans lequel coulisse une tige télescopique supportant un train de roues (on pourra par exemple se référer au document US-A-4.406.432). Dans ce cas, le relevage est organisé dans un plan parfaitement transversal, selon une trajectoire qui est un quart de cercle contenu dans ce plan transversal. Cette disposition est avantageuse pour l'organisation du logement du train d'atterrissage, dans la mesure où la roue peut passer avec un faible jeu entre deux cadres de la structure de l'aéronef. Cependant, il n'est pas toujours possible de faire coïncider les positions des cadres de la structure d'aéronef avec la position nécessaire des atterrisseurs pour une répartition souhaitable des charges, vis-à-vis du centre de gravité de l'aéronef, entre l'atterrisseur avant et les atterrisseurs principaux. Ainsi, en position train bas, l'axe des roues des atterrisseurs principaux peut en particulier être décalé vers l'arrière des cadres de structure, ce qui implique d'avancer la ou les roues en cours de relevage du train.

On utilise par exemple des jambes de train d'atterrissage constituées par un caisson rigide articulé sur la structure d'aéronef, et par un balancier porteur de roues articulé en extrémité de ce caisson. Pour pouvoir passer de la position train bas, dans laquelle l'axe d'articulation du balancier est essentiellement perpendiculaire au plan longitudinal médian de l'aéronef, à la position train haut dans laquelle les roues sont avancées plus en avant pour passer dans le logement associé, on utilise en général un axe longitudinal incliné comme axe de pivotement du caisson. Cependant, la trajectoire est alors contraignante, en particulier lorsque le déport est important entre la structure de l'aéronef et les roues de l'atterrisseur en position train bas, et, si l'on recherche avant tout la compacité du logement, il y a un risque de devoir adapter la partie inférieure de la structure de l'aéronef, par exemple en dégageant des parties basses des cadres délimitant ce logement.

L'invention a précisément pour but de résoudre ce problème, en concevant un train d'atterrissage ne présentant pas les inconvénients et/ou limitations précités, au regard de la complexité structurelle du train et des contraintes affectant la structure de l'aéronef pour la rentrée de ce train et son logement en position train haut.

L'état de la technique est également illustré par le document DE-C-1.272.736 dans lequel est décrit un train d'atterrissage à relevage latéral, comportant trois balanciers articulés sur une structure à deux bras. En position train bas, les trois roues du train sont disposées dans deux plans parallèles voisins (avec la roue avant et la roue arrière dans le plan extérieur, et la roue centrale dans le plan intérieur), pour former un groupe compact. Pour éviter d'avoir un logement de réception de hauteur excessive, il est prévu, avant de relever le train, d'avancer la roue avant et la roue centrale en faisant pivoter leur balancier respectif, de façon à pouvoir amener les trois roues dans un plan horizontal commun en position train haut.

Cette approche, particulière à un train à trois roues, a cependant l'inconvénient d'augmenter considérablement l'encombrement du logement dans le sens longitudinal. De plus, la structure utilisée est complexe, car le relevage de la roue centrale et le relevage des roues avant et arrière doivent être assurés par des moyens séparés.

On peut enfin citer le document GB-A-911.121 au titre de l'arrière-plan technologique, dans lequel est décrit un train d'atterrissage à relevage vertical agencé pour un encombrement minimal en hauteur en position train haut (au détriment de l'encombrement du logement dans le sens longitudinal).

L'invention a ainsi pour objet de réaliser un train d'atterrissage du type à relevage latéral, dont la structure permet d'optimiser la cinématique des composants mobiles pour passer d'une position à l'autre dudit train en se conformant à une trajectoire optimale au regard de la géométrie particulière de l'aéronef, tout en facilitant le contrôle de cette trajectoire lors des mouvements de relevage ou de descente du train, de façon à pouvoir utiliser un logement de compacité optimale dans le sens longitudinal sans risque de perturbation lors de l'approche des roues.

Il s'agit plus particulièrement d'un train d'atterrissage d'aéronef, du type à relevage latéral, comportant une jambe articulée sur une structure d'aéronef et équipée inférieurement d'un train de roues, et un vérin de manoeuvre assurant le pivotement de cette jambe autour de son axe, caractérisé en ce que :
- la jambe est formée d'un caisson rigide articulé sur la structure d'aéronef, et d'un balancier porteur de roues articulé en extrémité du caisson en pouvant tourner autour d'un axe qui, en position train bas, est sensiblement perpendiculaire au plan longitudinal médian de l'aéronef ;
- un amortisseur relie le caisson au balancier, en étant articulé sur ledit balancier en un point situé entre l'axe d'articulation de ce balancier et l'axe du train de roues ;
- le balancier est en outre directement relié à un moyen de commande de pivotement qui est agencé pour diminuer, lors du relevage du train, l'angle que forment la direction du caisson et la direction du balancier, de façon qu'en position train haut ledit balancier s'étende sensiblement dans le prolongement dudit caisson, et inversement pour augmenter cet angle lors de la descente dudit train, en se conformant à une trajectoire prédéterminée.

L'utilisation combinée des deux axes de pivotement et du moyen de commande de pivotement du balancier permet d'obtenir une définition optimale de la trajectoire et un excellent contrôle de cette trajectoire, sans complication notable de la structure du train d'atterrissage.

De préférence, le caisson rigide est articulé sur la structure d'aéronef en pouvant tourner autour d'un axe qui est sensiblement parallèle à l'axe central de l'aéronef, ce qui simplifie l'agencement de la structure de l'aéronef.

Plusieurs variantes peuvent en outre être envisagées dans le cadre de l'invention, selon la structure particulière du moyen de commande de pivotement.

Dans un premier mode d'exécution possible, le moyen de commande de pivotement du balancier est constitué par un système articulé monté sur le caisson rigide, ce système comportant une triangulation sur laquelle est accroché l'amortisseur et un organe de liaison articulé sur la structure d'aéronef, en étant agencé de façon à pousser (respectivement tirer) sur cet amortisseur lors du relevage (respectivement de la descente) du train.

Dans ce cas, on pourra prévoir que le système articulé inclut un levier articulé sur le caisson rigide, ledit levier comportant un premier bras qui définit, avec une bielle reliant ce bras au point d'accrochage de l'amortisseur, un alignement de verrouillage en position train bas, et un second bras qui est directement attaqué par l'organe de liaison articulé sur la structure d'aéronef. En outre, selon que l'on souhaite avoir deux mouvements de pivotement réalisés simultanément ou séquentiellement, on prévoira que l'organe de liaison est réalisé sous la forme d'une bielle ou d'un vérin hydraulique.

Dans un autre mode d'exécution possible, le moyen de commande de pivotement du balancier est constitué par une came articulée sur le caisson rigide, avec laquelle coopère un galet monté sur un appendice du balancier, et par un organe de liaison reliant cette came articulée à la structure d'aéronef, ladite came incluant une butée contre laquelle ledit galet est maintenu en appui, en position train bas, par la poussée exercée par l'amortisseur sur le balancier, et ledit organe de liaison étant agencé pour escamoter (respectivement replacer) ladite butée lors du relevage (respectivement de la descente) du train.

Selon le cas, comme précédemment, on pourra prévoir que l'organe de liaison est réalisé sous la forme d'une bielle ou d'un vérin hydraulique.

Dans un autre mode d'exécution possible, le moyen de commande de pivotement du balancier est constitué par une bielle télescopique reliant un appendice du balancier à un bras d'un levier qui est articulé sur un appendice du caisson rigide, l'autre bras de ce levier étant relié à la structure d'aéronef par l'intermédiaire d'une bielle associée.

Dans encore un autre mode d'exécution possible, le moyen de commande de pivotement du balancier est constitué par une bielle télescopique à système intégré de commande hydraulique d'allongement ou de raccourcissement, reliant un appendice du balancier à un appendice du caisson rigide. En particulier, la bielle télescopique peut en outre inclure un système oléo-pneumatique de secours permettant, en cas de panne hydraulique, de faire pivoter le balancier par action d'un poussoir interne associé.

Dans un autre mode d'exécution possible, le moyen de commande de pivotement du balancier est constitué par un vérin hydraulique intégré dans l'amortisseur, ledit amortisseur comportant à cet effet une tige télescopique équipée intérieurement d'une tige-piston et d'un organe de verrouillage associé, laquelle tige-piston est accrochée sur un appendice du balancier.

D'autres caractéristiques et avantages de l'invention apparaîtront plus clairement à la lumière de la description qui va suivre et des dessins annexés, concernant différents modes d'exécution particuliers, en référence aux figures où :
- les figures 1 à 3 illustrent un train d'atterrissage conforme à l'invention (les figures 1 et 2 étant des vues respectivement latérale et frontale en position train bas, et la figure 3 une vue frontale en position train haut), avec un moyen de commande de pivotement du balancier constitué par un système articulé incluant un alignement de verrouillage en position train bas ;
- les figures 4 à 6 sont des vues analogues illustrant une variante proche du mode de réalisation précédent, dans laquelle l'alignement de verrouillage en position train bas est verrouillé non pas déplié mais replié;
- les figures 7 à 9 (la figure 9 montre encore la position train haut, mais ici en vue de dessus) illustrant un autre mode d'exécution, dans lequel le moyen de commande de pivotement est constitué par une butée escamotable portée par une came articulée et une bielle de liaison;

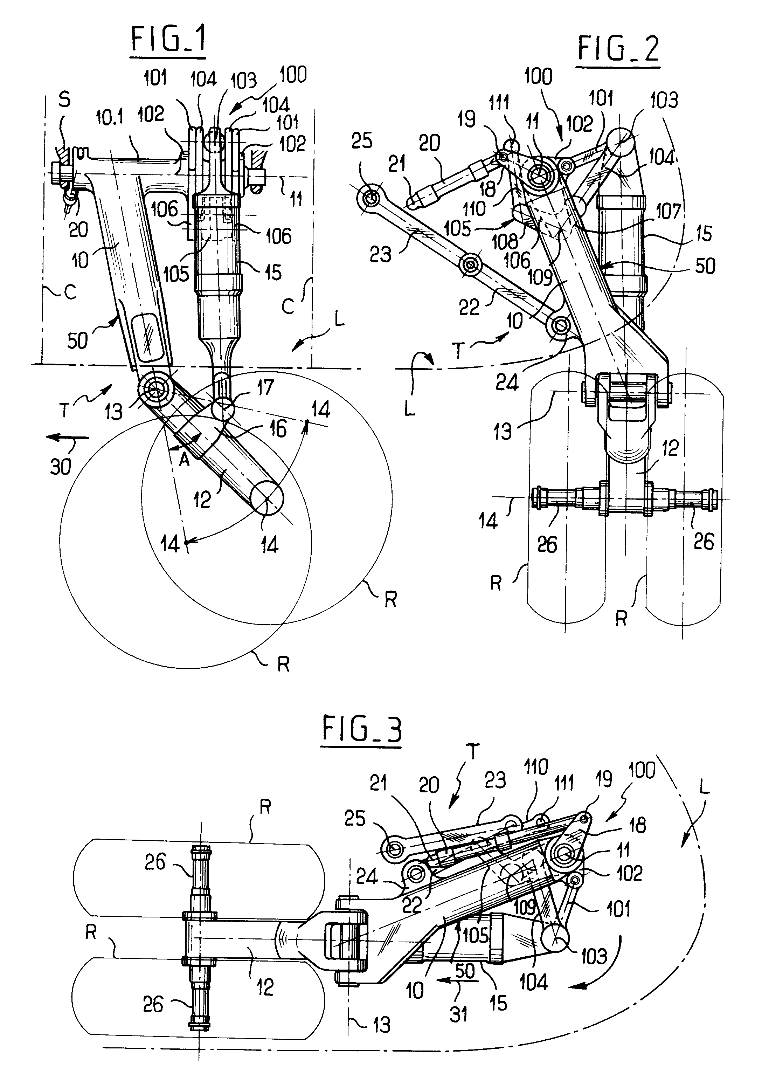

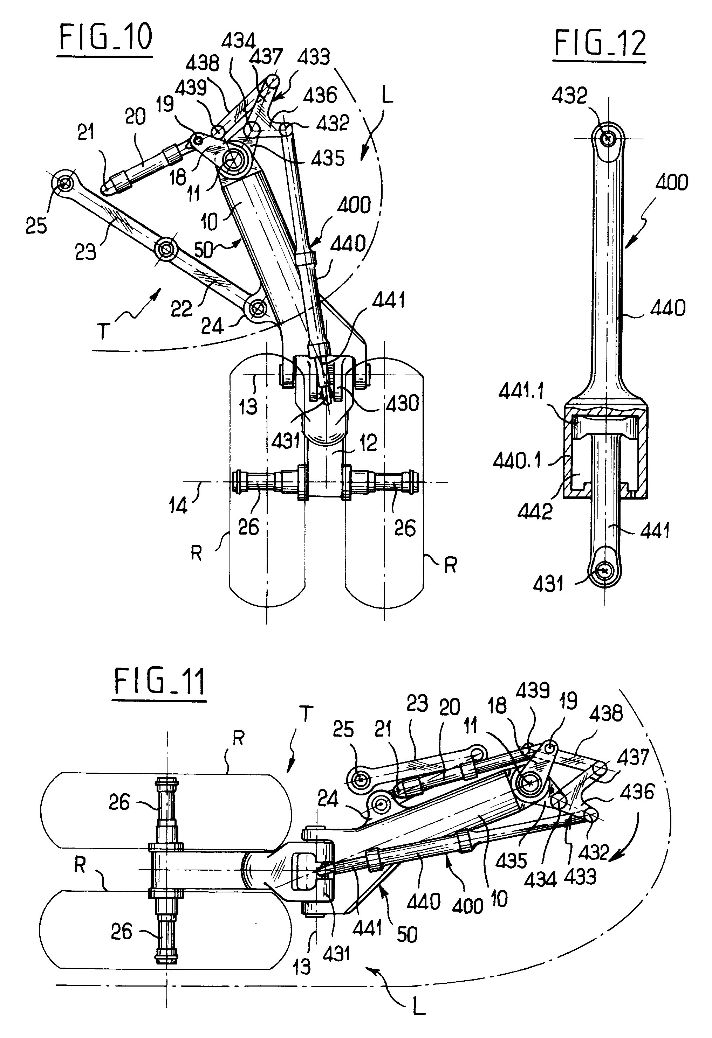

- les figures 1O et 11 illustrent un autre mode d'exécution dans lequel le moyen de commande de pivotement est constitué par une bielle télescopique, laquelle bielle est représentée sur la coupe axiale de la figure 12 ;

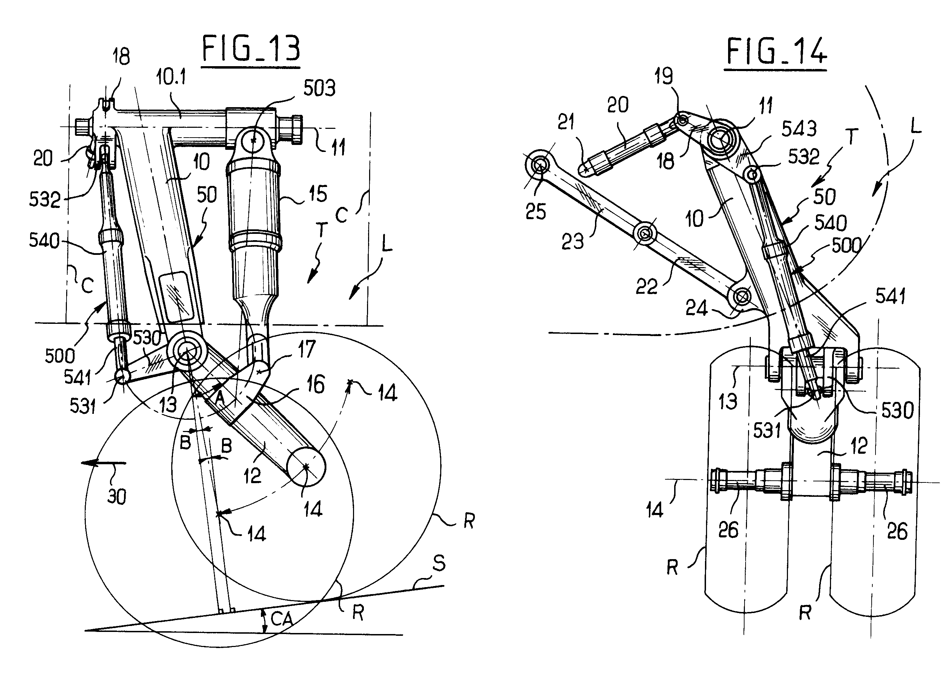

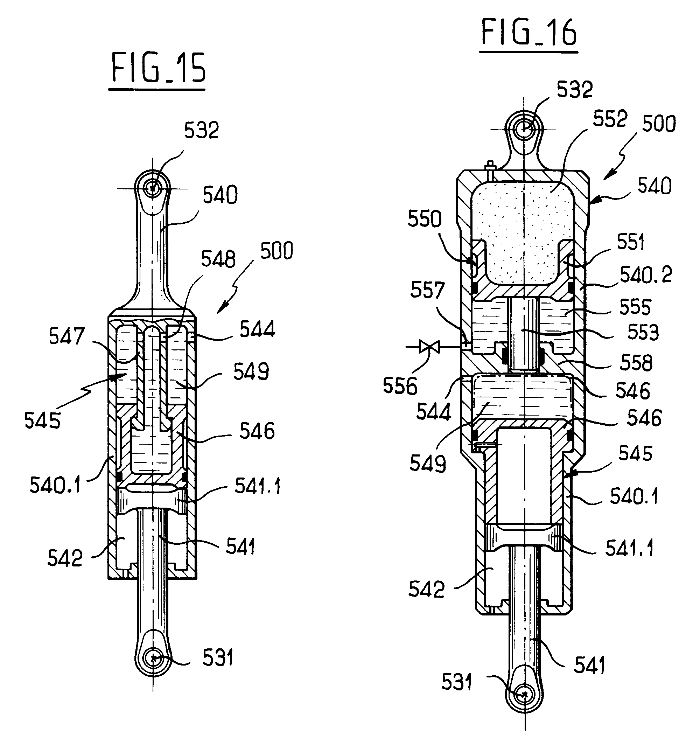

- les figures 13 et 14 illustrent une variante proche du mode de réalisation précédent, dans laquelle la bielle télescopique inclut un système intégré de commande hydraulique d'allongement ou de raccourcissement, laquelle bielle est représentée en coupe sur la figure 15 ;
- la figure 16 illustre en coupe une variante de la bielle télescopique de la figure 15, qui inclut en outre un système oléo-pneumatique de secours ;

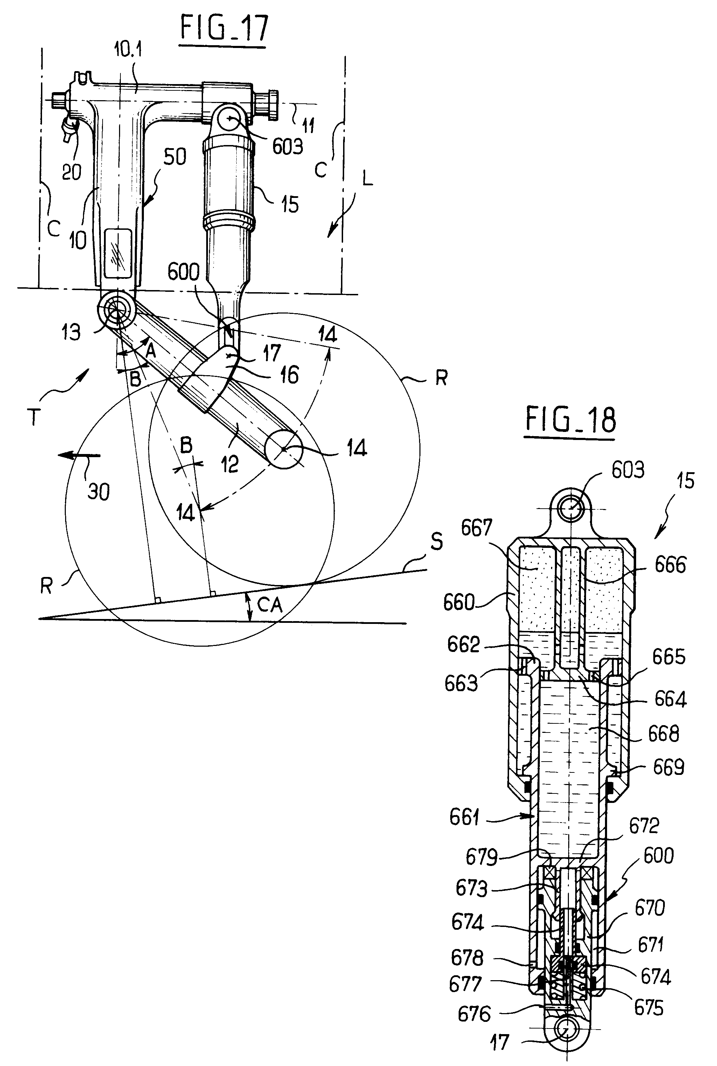

- la figure 17 illustre un autre mode d'exécution dans lequel le moyen de commande de pivotement est constitué par un vérin hydraulique intégré dans l'amortisseur, cet amortisseur spécial à plusieurs fonctions étant représenté en coupe sur la figure 18.

On va maintenant décrire, en se référant aux figures 1 à 3, un train d'atterrissage T conforme à l'invention, ledit train étant du type à relevage latéral, et étant reçu dans un logement associé L de la structure d'aéronef concernée, ledit logement étant délimité par deux cadres transversaux C espacés entre eux d'une distance correspondant sensiblement au diamètre des roues R de ce train d'atterrissage.

Le train d'atterrissage T comporte une jambe 5O articulée sur une structure d'aéronef S et équipée inférieurement d'un train de roues R, un vérin de manoeuvre 2O assurant le pivotement de cette jambe autour de son axe.

La jambe 5O est formée d'un caisson rigide 1O, articulé par sa portion supérieure 1O.1 sur la structure d'aéronef en pouvant tourner autour d'un axe 11 est ici sensiblement parallèle à l'axe central de l'aéronef (il va de soi cependant que l'axe 11 pourra présenter une légère inclinaison par rapport au plan longitudinal médian de l'aéronef et/ou à un plan transversal), et d'un balancier porteur de roues 12 articulé en extrémité du caisson 10 en pouvant tourner autour d'un axe 13 qui, en position train bas, est sensiblement perpendiculaire au plan longitudinal médian de l'aéronef (dans la pratique, on s'arrange pour avoir cette perpendicularité sous charge pour limiter l'usure des pneus). L'axe 14 des fusées 26 de roues est ici agencé en bout du balancier 12. La direction de l'avion est en outre schématisée par la flèche 30. Dans le mode de réalisation particulier représenté ici, les axes principaux de pivotement, c'est-à-dire l'axe 11 de pivotement du caisson rigide 10, et l'axe 13 de pivotement du balancier porteur de roues 12, sont sensiblement orthogonaux.

Ainsi que cela est mieux visible sur la vue en position train bas de la figure 2, on a également prévu des moyens de contreventement de type traditionnel associés à la jambe 50, avec ici une contre-fiche articulée comportant un bras 22 articulé sur un appendice 24 du caisson rigide 10, et un bras 23 articulé en un point 25 sur la structure d'aéronef. On distingue également sur cette figure un appendice supérieur 18 solidaire du caisson rigide 10, en extrémité duquel vient s'articuler, en un point 19, le vérin de manoeuvre 20 associé, dont le corps est articulé en un point 21 sur la structure d'aéronef. Il va de soi que la contrefiche constituée par les bras 22 et 23 pourra être équipée de tout système de verrouillage et déverrouillage de type traditionnel, un tel système n'étant pas illustré ici.

Un amortisseur 15 relie en outre le caisson rigide 10 au balancier oscillant 12, cet amortisseur étant articulé sur le balancier en un point 17 d'un appendice 16 dudit balancier, lequel point 17 est situé entre l'axe d'articulation 13 de ce balancier et l'axe 14 du train de roues R.

Conformément à une caractéristique essentielle de l'invention, le balancier 12 est en outre directement relié, ici par l'intermédiaire de l'amortisseur 15, à un moyen de commande de pivotement qui est agencé pour diminuer, lors du relevage du train, l'angle A que forment la direction du caisson rigide 10 et la direction du balancier 12, de façon qu'en position train haut ledit balancier s'étende sensiblement dans le prolongement dudit caisson, et inversement pour augmenter cet angle lors de la descente dudit train, en se conformant à une trajectoire prédéterminée.

En l'espèce, le moyen de commande de pivotement du balancier est constitué par un système articulé 100 associé à l'accrochage de la partie haute de l'amortisseur 15. Plus précisément, le système articulé 100 comporte une triangulation sur laquelle est accroché l'amortisseur 15 au niveau d'un point 103, et un organe de liaison 110 articulé sur la structure d'aéronef en un point d'extrémité 111 dudit organe. On distingue ainsi sur la figure 2 une première bielle 101 articulée sur un appendice latéral 102 du caisson rigide 10, et une seconde bielle 104 articulée coaxialement à la première bielle 101 au niveau du point d'accrochage 103 de l'amortisseur 15, cette seconde bielle 104 étant articulée à son autre extrémité sur un levier 105 lui-même articulé en 109 sur un appendice 106 du caisson rigide 10. Ainsi que cela est mieux visible sur la figure 1, on utilise en réalité, de part et d'autre d'un plan longitudinal médian de l'amortisseur, un double appendice 102 formant une chape sur laquelle sont articulées deux bielles 101 reliées à deux bielles 104, agencées symétriquement de part et d'autre de ce plan. On pourra naturellement prévoir un raccordement de ces bielles symétriques. De même, un double appendice 106 est également prévu, définissant une chape inférieure, pour l'articulation du levier 105 faisant partie du système articulé 100. Le levier 105 comporte un premier bras 107 qui définit, avec la bielle 104 reliant ce bras au point d'accrochage 103 de l'amortisseur 15, un alignement de verrouillage en position train bas (position de la figure 2), et un second bras 108 qui est directement attaqué par l'organe de liaison 110 articulé sur la structure d'aéronef. En l'espèce, l'organe de liaison 110 est réalisé sous la forme d'une bielle rigide. Ainsi qu'on le verra par la suite, il peut s'avérer intéressant de remplacer cette bielle par un vérin hydraulique, dans le cadre d'une réalisation séquentielle des mouvements de pivotement du train d'atterrissage.

Le système articulé 100 comporte ainsi une triangulation 101, 104, 105 sur laquelle est accroché l'amortisseur 15, ainsi que l'organe de liaison 110 articulé sur la structure d'aéronef, et ce système est agencé de façon à pousser (respectivement tirer) sur cet amortisseur lors du relevage (respectivement de la descente) du train d'atterrissage T. En effet, ainsi que cela est mieux visible sur la représentation train haut donnée à la figure 3, on constate que les bielles 101 et 104 ont exercé une poussée sur l'amortisseur 15, comme schématisé par la flèche 31, laquelle poussée est transmise directement au balancier oscillant 12, ce qui a pour effet de diminuer l'angle A formé par la direction du caisson rigide 10 et la direction du balancier 12. Sur la figure 1, on a représenté la position train bas normal, qui est ici une position intermédiaire entre la position haute des roues correspondant à une compression maximale de l'amortisseur 15, et une position basse des roues dans laquelle l'angle A est pratiquement nul, c'est-à-dire que le balancier 12 s'étend alors dans le prolongement direct (en vue latérale selon la figure 1) du caisson rigide 10, cette position étant atteinte lorsque le train d'atterrissage atteint sa position finale de réception dans le logement L associé, les roues R étant alors progressivement avancées lors du pivotement de la jambe 50, pour finalement venir passer précisément entre les deux cadres concernés C délimitant le logement associé L. On peut de ce fait avoir un logement L qui est de compacité optimale dans le sens longitudinal.

Le système articulé 100 est ici exclusivement constitué par des éléments mécaniques rigides, de sorte que la cinématique est parfaitement définie à tout instant du mouvement de relevage ou de descente du train. Lors de la descente du train, les bielles 101 et 104 auxquelles est attaché supérieurement l'amortisseur 15 exercent une traction sur cet amortisseur tendant à le remonter, laquelle traction a pour effet de faire pivoter le levier oscillant 12 en augmentant l'angle A associé, et ce jusqu'à ce que la position finale train bas soit atteinte.

Il convient de noter que la bielle 104 et le bras 107 du levier 105 définissent tous deux un alignement de verrouillage en position train bas, comme illustré sur la figure 2, cet alignement étant ici verrouillé déplié. Il va de soi que le système articulé pourrait être agencé différemment, et la variante qui va être décrite ci-après comporte un agencement différent avec un alignement de verrouillage en position train bas qui est verrouillé replié. Par ailleurs, si l'on souhaite avoir deux mouvements de pivotement réalisés non plus simultanément, mais séquentiellement, il suffit de remplacer la bielle 110 du système articulé 100 qui vient d'être décrit par un vérin hydraulique de pivotement(variante non représentée ici), lequel vérin doit alors naturellement être accroché non plus sur la structure d'aéronef, mais sur le caisson rigide. Dans ce cas, pour le relevage du train, on commence par alimenter ce vérin de pivotement pour faire pivoter le basculeur 12 en faisant avancer les roues associées, puis, une fois la position angulaire désirée atteinte (cette position étant par exemple détectée au moyen d'un capteur et d'une cible), on alimente le vérin de manoeuvre 20 pour déclencher le pivotement de la jambe qui se comporte alors comme un ensemble rigide monolithique.

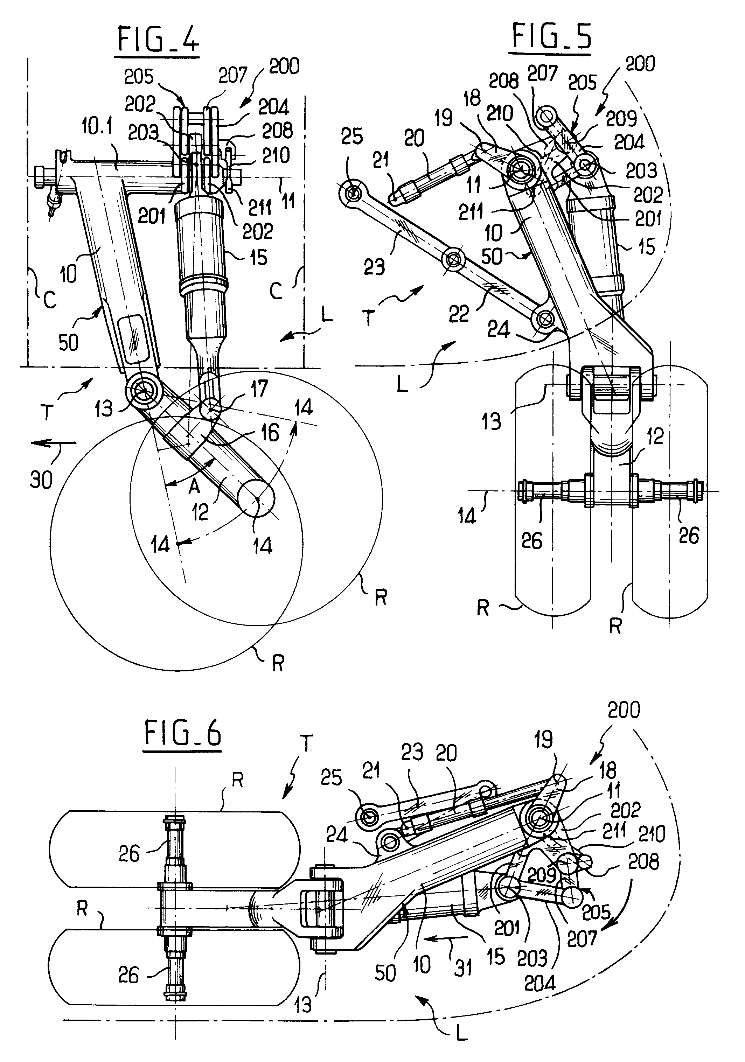

Les figures 4 à 6 illustrent une variante qui est proche du mode de réalisation précédent qui vient d'être décrit, de sorte que l'on a conservé les mêmes références pour les éléments homologues. Le moyen de pivotement du balancier, référencé 200, est là encore constitué par un système articulé monté sur le caisson rigide 10, ce système comportant une triangulation sur laquelle est accroché l'amortisseur 15, et un organe de liaison 210 articulé sur la structure d'aéronef, en étant agencé de façon à pousser (respectivement tirer) sur cet amortisseur lors du relevage (respectivement de la descente) du train. Le système articulé 200 est cependant agencé différemment par rapport au système articulé de la variante précédemment décrite, comme expliqué ci-après.

Le caisson rigide 10 présente en partie haute un appendice central 202, sur lequel vient s'articuler une bielle 201 d'une part et un levier 205 d'autre part. Le levier 205 est articulé en pouvant tourner autour d'un axe 209, et comporte un premier bras 207 se raccordant à une bielle 204, cette dernière rejoignant la bielle 201 au niveau du point d'accrochage 203 de l'amortisseur 15. L'autre bras 208 du levier 205 est quant à lui directement attaqué par l'organe de liaison 210 articulé sur la structure d'aéronef, lequel organe est en l'espèce réalisé sous la forme d'une bielle rigide. Ainsi que cela est visible sur la figure 5, on retrouve ainsi une triangulation 201, 204, 205 sur laquelle est accroché l'amortisseur 15, et le bras 207 du levier 205 définit avec la bielle 204 un alignement de verrouillage en position train bas, mais cet alignement est alors verrouillé replié (position de la figure 5). Lors du relevage du train T, les bielles 201 et 204 exercent une poussée sur l'amortisseur 15, et par suite induisent un pivotement du balancier 12 tendant à diminuer l'angle A pour faire avancer les roues R, comme pour la variante précédemment décrite. Ainsi que cela est mieux visible sur la figure 4, on a illustré ici une double bielle 204, une double bielle 201, et un double bras 207 du levier 205, avec un agencement symétrique de part et d'autre d'un plan médian de l'amortisseur, le bras 208 dudit levier étant quant à lui agencé en saillant latéralement. Comme précédemment, lorsque l'on souhaite réaliser les deux mouvements de pivotement de façon séquentielle, il suffit alors de remplacer la bielle rigide 210 par un vérin hydraulique de pivotement. Le processus de relevage ou de descente du train est alors réalisé de la même façon que ce qui a été précédemment décrit dans le cas d'une réalisation séquentielle des deux mouvements de pivotement.

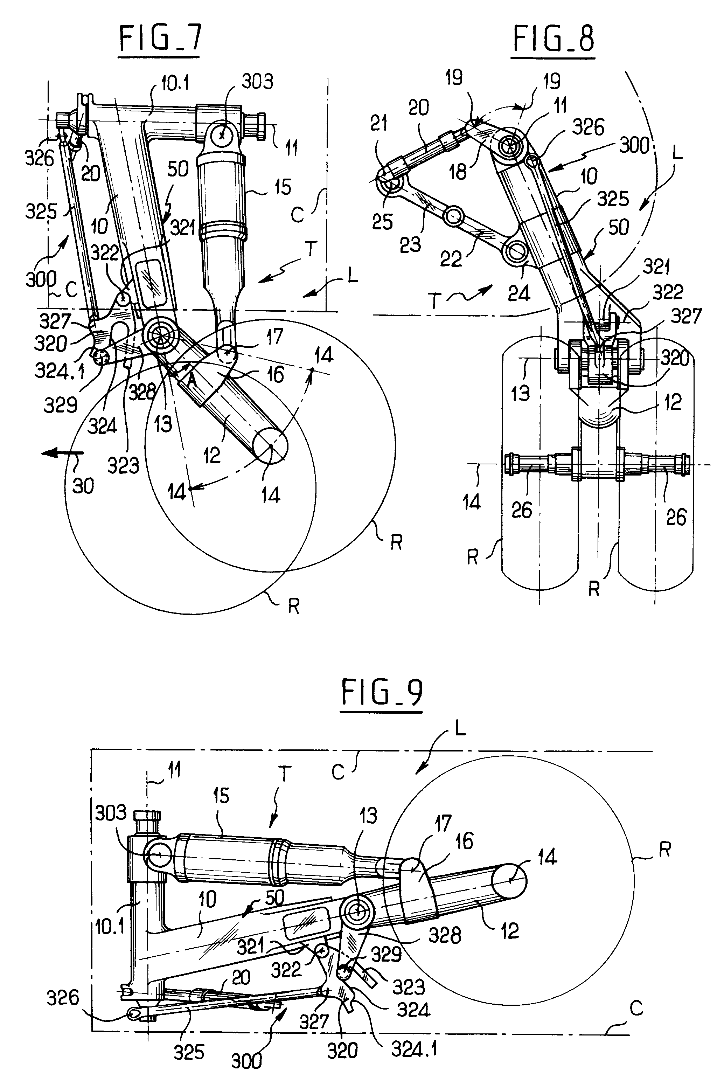

On va maintenant décrire un autre mode d'exécution de l'invention, en se référant aux figures 7 à 9.

On retrouve comme précédemment une jambe constituée par un caisson rigide et un balancier articulé, de sorte que les mêmes références ont été conservées pour les composants communs. A la différence des trains d'atterrissage précédents, on constate tout d'abord que l'amortisseur 15 est accroché directement en un point 303 sur la portion 10.1 du caisson rigide entourant l'axe de pivotement 11.

La différence essentielle réside dans une structure particulière du moyen de commande du pivotement du balancier, lequel moyen est référencé 300.

Le moyen de commande 300 est constitué par une came 320, articulée autour d'un axe 322 porté par un appendice 321 du caisson rigide 10, came avec laquelle coopère un galet 329 monté en extrémité d'un appendice 328 du balancier 12. Il convient d'organiser le pivotement de la came 320 autour de son axe lors du pivotement du caisson rigide 10 autour de son axe 11 : en l'espèce, ceci est assuré au moyen d'un organe de liaison 325 reliant cette came articulée 320 à la structure d'aéronef. Cet organe de liaison 325 est ici réalisé sous la forme d'une bielle allongée, articulée en 327 sur la came articulée 320, et en 326 sur la structure d'aéronef. La came 320 comporte un profil actif 324 avec lequel coopère le galet 329, ce contour incluant une portion formant butée 324.1 contre laquelle le galet 329 est maintenu en appui, en position train bas (comme illustré sur la figure 7), par la poussée exercée par l'amortisseur 15 sur le balancier 12. Lors du pivotement du caisson rigide 10 autour de son axe 11 par suite de l'actionnement du vérin de manoeuvre 20, la bielle de commande 325 exerce une traction sur la came articulée 320, ce qui dégage le galet 329 de la butée associée 324.1, et par suite libère le pivotement du balancier 12 autour de son axe 13. Lors de ce pivotement, le galet 329 reste au contact de ce profil de came associé 324, jusqu'à ce que soit atteinte la position dans laquelle ledit galet atteint l'extrémité du profil, position qui est illustrée sur la figure 9 et qui correspond à une vue de dessus en position train haut. Ainsi, dès que la butée articulée 320 est escamotée par suite de la traction exercée sur celle-ci par la bielle de commande 325, il y a libération de la détente de l'amortisseur 15 qui peut faire pivoter le balancier 12 afin de faire avancer les roues R lors du pivotement de la jambe du train. La butée 324.1 est ainsi une butée de détente, et le contact est assuré en permanence en position train bas grâce à la réserve de poussée procurée par l'amortisseur 15. Il est intéressant de noter la présence d'un bras 323 venant compléter le profil de came 324 : ce bras, qui n'est naturellement aucunement obligatoire dans la mesure où le galet 329 ne devrait en principe pas venir le contacter, constitue néanmoins une sécurité intéressante garantissant la bonne trajectoire du galet 329, en constituant notamment un organe de sécurité supplémentaire en cas de dégonflage de l'amortisseur 15, car le galet 329 est alors emprisonné au fond de la lumière associée.

Comme précédemment, si l'on souhaite réaliser les deux mouvements de pivotement de façon séquentielle, il suffit alors de remplacer la bielle de commande, en l'espèce la bielle 325, par un vérin hydraulique de pivotement associé commandant le mouvement de pivotement de la came articulée 320. Le processus du relevage comporte alors une étape préliminaire de dégagement de la butée de la came articulée pour libérer le pivotement du balancier, puis l'on retrouve les étapes de pivotement du balancier autour de son axe 13, et enfin le pivotement du caisson rigide 10 autour de son axe 11.

On va maintenant décrire, en se référant aux figures 10 à 12, un autre mode d'exécution du train d'atterrissage selon l'invention, dans lequel on retrouve des organes précédemment décrits, affectés là encore des mêmes références que précédemment.

La différence essentielle réside dans l'agencement particulier du moyen de commande de pivotement du balancier 12, lequel moyen est ici réalisé sous la forme d'une bielle télescopique 400. Le balancier 12 présente à cet effet un appendice 430 servant à l'accrochage, au point 431, de l'extrémité de la tige 441 de la bielle télescopique. A son autre extrémité, le corps 440 de la bielle télescopique 400 est articulé, en un point 432, sur un bras 436 d'un levier 433 lui-même articulé en 434 sur un appendice 435 du caisson rigide 10, l'autre bras 437 de ce levier étant quant à lui relié à la structure d'aéronef par l'intermédiaire d'une bielle associée 438 articulée en 439 sur la structure d'aéronef.

La figure 12 permet de mieux distinguer la structure de la bielle télescopique 400 utilisée ici, et l'on distingue en particulier un piston 441.1 solidaire de la tige 441, et le corps creux 440.1 solidaire du corps 440, dans lequel coulisse ce piston 441.1, ce qui permet d'obtenir une protection complète de la zone de coulissement de ce piston dans la chambre associée 442 qui est ouverte à l'air libre. La position illustrée en figure 12 est une position de butée franche, position dans laquelle les organes mécaniques de butée sont parfaitement protégés contre les agents extérieurs.

On pourra naturellement en variante modifier le corps 440 de cette bielle télescopique 400, de façon à insérer un vérin hydraulique de manoeuvre, ceci dans le cas où l'on souhaiterait avoir une réalisation séquentielle des deux mouvements de pivotement, variante qui va être décrite ci-après en se référant aux figures 13 et 14, et dans laquelle la bielle télescopique inclut dans son corps creux un système intégré de commande hydraulique d'allongement ou de raccourcissement.

La bielle télescopique 500 est ici directement accrochée, en un point 532, à un appendice 543 solidaire de la portion 10.1 du caisson rigide 10, de sorte que le corps 540 de cette bielle de commande n'est plus accroché sur un système articulé à levier comme c'était le cas pour la variante précédente. La tige 541 de cette bielle est quant à elle articulée en un point 531 sur un appendice 530 du balancier 12. Sur la figure 13, on a représenté le sol S avec l'angle de cabrage CA de l'avion lors du contact des roues R avec le sol S. On retrouve comme précédemment l'angle A défini par la direction du caisson rigide 10 et celle du balancier oscillant 12. On trouve en outre un angle B qui est associé à l'angle de cabrage CA.

La figure 15 représente en coupe la bielle spéciale de commande 500 qui permet d'organiser le pivotement du balancier 12, conformément à un mode d'exécution séquentiel des deux mouvements de pivotement.

On retrouve comme précédemment une partie coulissante avec un piston 541.1 se déplaçant dans un corps creux 540.1, avec une chambre associée 542 ouverte à l'air libre. On trouve en plus ici, juxtaposés aux composants précédents, des organes assurant la commande hydraulique d'allongement ou de raccourcissement de la bielle télescopique 500. Le corps creux 540.1 reçoit en effet un piston 546 qui coulisse sur une tige intérieure fixe 547 percée d'orifices 548. Le corps 540.1 est en outre muni d'un orifice 544 qui peut être relié soit à une source de pression hydraulique, soit à une bâche hydraulique, la chambre correspondante 549 étant alors occupée par du fluide hydraulique.

La position illustrée sur la figure 15 correspond à la commande d'un allongement maximum, c'est-à-dire à un mouvement de descente du train. Pour le relevage du train, il suffit de mettre l'orifice 544 en communication avec la bâche pour que le piston 546 puisse alors librement remonter, en libérant l'action de la tige-piston 541 correspondant à l'obtention du pivotement désiré du balancier autour de son axe 13. De préférence, on prévoira alors un capteur servant à détecter la position correcte du balancier en fin de pivotement, afin de relever la jambe de l'atterrisseur.

La figure 16 illustre en coupe une variante de la bielle télescopique de la figure 15, variante dans laquelle la bielle 500 inclut en outre un système oléo-pneumatique de secours 550 permettant, en cas de panne hydraulique, de faire pivoter le balancier 12 par action d'un poussoir interne associé 553.

On retrouve comme précédemment la tige-piston 541, le piston 546 et la chambre 549 associée munie de son orifice 544 correspondant au fonctionnement normal de la commande d'allongement ou de raccourcissement de la bielle. La bielle 500 se démarque de la bielle précédente par la présence, au-delà d'un fond fixe intermédiaire 558 d'un piston 551 coulissant dans une extension 540.2 du corps de la bielle, lequel piston délimite une chambre hydraulique 555 dans laquelle passe un poussoir interne 553 traversant le fond fixe 558, et une chambre 552 occupée par un fluide gazeux haute pression. Un orifice 557 est associé à la chambre hydraulique 555, lequel orifice est relié à une électrovanne 556 de commande en secours. Lorsque l'électrovanne 556 est excitée, l'ouverture de celle-ci autorise la descente du piston 551 sous l'action du fluide gazeux haute pression avec simultanément une sortie du fluide hydraulique de la chambre 555, le poussoir interne 553 repoussant alors le piston 546 depuis sa position illustrée en traits mixtes jusqu'à une position d'allongement maximum illustrée en trait continu sur la figure 16. Il n'est en réalité aucunement nécessaire que le système de secours assure la position "tout détendu" correspondant à cette représentation en trait continu : il suffit en effet que ce système ramène le balancier dans une position telle que l'angle B soit suffisant pour assurer un atterrissage correct. Ainsi que cela a été représenté à la figure 17, ce système peut même être supprimé si l'on prévoit un agencement différent de la géométrie, avec un balancier 12 allongé, ou encore un circuit d'alimentation secours supplémentaire. Si ce système de secours est utilisé, il convient ensuite de ramener du fluide sous pression via l'électrovanne 556, puis de boucher l'orifice correspondant 557 en cours de relevage, afin de réinitialiser le système de sécurité pour le relevage suivant.

On va maintenant décrire un autre mode d'exécution, en se référant plus particulièrement à la figure 18, dans lequel le moyen de commande de pivotement du balancier est constitué par un vérin hydraulique intégré dans l'amortisseur.

Comme sur la figure 17, l'amortisseur 15 est alors accroché au point 603 directement sur la portion 10.1 du caisson rigide 10, et la partie inférieure 600 de cet amortisseur 15 est articulée au point 17 sur l'appendice 16 du balancier 12. Dans ce cas, on ne trouve plus d'appendice ménagé en avant de ce balancier 12, lequel balancier est dans ce cas allongé.

Il convient de se référer à la figure 18 pour mieux appréhender la structure de cet amortisseur particulier incluant un vérin hydraulique intégré.

En partie haute de l'amortisseur 15, on distingue un cylindre 660 dans lequel coulisse une tige télescopique 661, ici en position d'extension maximale par appui des butées associées 669. Le piston 662 de la tige 661 présente des ouvertures de diaphragme 663, et la partie supérieure de cette tige est guidée par un disque 664 porté par une tige fixe 666, lequel disque présente également des orifices formant diaphragme 665, de telle façon que la chambre de fluide 668 communique avec la partie haute de l'amortisseur, la surface de fluide étant au contact direct d'un fluide gazeux 667, conformément à un mode d'exécution bien connu dans le domaine des amortisseurs.

La tige télescopique 661 présente en outre un fond fixe intermédiaire 672 en-dessous duquel on trouve un vérin hydraulique avec une tige 670 coulissant dans la tige télescopique 661. Le piston de cette tige 670 coulisse dans une chambre 671 et, en position haute de cette tige 670 (position illustrée sur la figure 18), ladite tige est retenue par un système de verrouillage à griffes 673 maintenu par un poussoir 674 soumis à l'action d'un ressort de poussée 675, ledit poussoir étant creux pour laisser passer le fluide hydraulique rentrant dans la tige 670 par un orifice latéral 676 et un conduit axial 677. La chambre 671 est en outre munie d'un orifice de fluide 678. On peut noter enfin la présence d'une butée supérieure de contact 679 contre laquelle vient en appui la partie supérieure de la tige 670 lorsque celle-ci est en position de rétraction maximale. La tige 670 est par ailleurs reliée par son extrémité au point 17 du balancier 12, comme c'était le cas pour un amortisseur de type standard.

Pour le relevage du train, le fluide sous pression est amené par l'orifice 676 de la tige 670, ce qui a pour effet de repousser le poussoir 674 vers le bas contre l'action du ressort associé 675, et de déverrouiller le système à griffes 673, ce qui autorise la sortie de la tige télescopique intérieure 670 (l'orifice 678 étant mis à la bâche), et par suite le pivotement du balancier 12. Lorsque la position angulaire désirée du balancier a été atteinte, on commande la fermeture de l'orifice 676, ou encore un maintien en pression, afin d'avoir un verrouillage en position par le fluide hydraulique. On procède ensuite au relevage normal en actionnant le vérin de manoeuvre 20, l'amortisseur 15 se comportant alors comme un ensemble monolithique.

Pour la descente du train, on procède de façon inverse, en actionnant d'abord le vérin de manoeuvre 20, puis, lorsque la position basse du caisson rigide a pu être détectée (par exemple au moyen d'un capteur associé à la contre-fiche de verrouillage en position de train bas), on admet alors du fluide sous pression au niveau de l'orifice 678, l'orifice 676 étant alors relié à la bâche, ce qui provoque la rentrée de la tige intérieure télescopique 670, jusqu'au verrouillage de celle-ci par le système à griffes 673, l'alimentation fluidique étant arrêtée lorsque le verrouillage a été détecté. La remontée de la tige télescopique 670 produit ainsi le mouvement de pivotement désiré du balancier 12, jusqu'à ce que la position finale du train soit obtenue.

On pourra naturellement envisager d'autres variantes d'exécution de l'amortisseur 15 illustré en figure 18, par exemple en prévoyant une butée escamotable de la tige coulissante 661 par rapport au corps 66O.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Train d'atterrissage d'aéronef, du type à relevage latéral, comportant une jambe articulée sur une structure d'aéronef et équipée inférieurement d'un train de roues, et un vérin de manoeuvre assurant le pivotement de cette jambe autour de son axe, caractérisé en ce que :
- la jambe (50) est formée d'un caisson rigide (10) articulé sur la structure d'aéronef, et d'un balancier porteur de roues (12) articulé en extrémité du caisson (10) en pouvant tourner autour d'un axe (13) qui, en position train bas, est sensiblement perpendiculaire au plan longitudinal médian de l'aéronef ;
- un amortisseur (15) relie le caisson (1O) au balancier (12), en étant articulé sur ledit balancier en un point (17) situé entre l'axe d'articulation (13) de ce balancier et l'axe (14) du train de roues ;
- le balancier (12) est en outre directement relié à un moyen de commande de pivotement (100 ; 200 ; 300 ; 400; 500 ; 600) qui est agencé pour diminuer, lors du relevage du train, l'angle (A) que forment la direction du caisson et la direction du balancier, de façon qu'en position train haut ledit balancier s'étende sensiblement dans le prolongement dudit caisson, et inversement pour augmenter cet angle lors de la descente dudit train, en se conformant à une trajectoire prédéterminée.

2. Train d'atterrissage selon la revendication 1, caractérisé en ce que le caisson rigide (1O) est articulé sur la structure d'aéronef en pouvant tourner autour d'un axe (11) qui est sensiblement parallèle à l'axe central de l'aéronef.

3. Train d'atterrissage selon la revendication 1 ou la revendication 2, caractérisé en ce que le moyen de commande de pivotement du balancier est constitué par un système articulé (100 ; 200) monté sur le caisson rigide (1O), ce système comportant une triangulation (101, 104, 105 ; 201, 204, 205) sur laquelle est accroché l'amortisseur (15) et un organe de liaison (110 ; 210) articulé sur la structure d'aéronef, en étant agencé de façon à pousser (respectivement tirer) sur cet amortisseur lors du relevage (respectivement de la descente) du train.

4. Train d'atterrissage selon la revendication 3, caractérisé en ce que le système articulé (100 ; 200) inclut un levier (105 ; 205) articulé sur le caisson rigide (1O), ledit levier comportant un premier bras (107 ; 207) qui définit, avec une bielle (104 ; 204) reliant ce bras au point d'accrochage (103 ; 203) de l'amortisseur (15), un alignement de verrouillage en position train bas, et un second bras (108 ; 208) qui est directement attaqué par l'organe de liaison (110 ; 210) articulé sur la structure d'aéronef.

5. Train d'atterrissage selon la revendication 3 ou la revendication 4, caractérisé en ce que l'organe de liaison (110 ; 210) est réalisé sous la forme d'une bielle ou d'un vérin hydraulique.

6. Train d'atterrissage selon la revendication 1 ou la revendication 2, caractérisé en ce que le moyen de commande (300) de pivotement du balancier est constitué par une came (320) articulée sur le caisson rigide (10), avec laquelle coopère un galet (329) monté sur un appendice (328) du balancier (12), et par un organe de liaison (325) reliant cette came articulée à la structure d'aéronef, ladite came incluant une butée (324.1) contre laquelle ledit galet est maintenu en appui, en position train bas, par la poussée exercée par l'amortisseur (15) sur le balancier (12), et ledit organe de liaison étant agencé pour escamoter (respectivement replacer) ladite butée lors du relevage (respectivement de la descente) du train.

7. Train d'atterrissage selon la revendication 6, caractérisé en ce que l'organe de liaison (325) est réalisé sous la forme d'une bielle ou d'un vérin hydraulique.

8. Train d'atterrissage selon la revendication 1 ou la revendication 2, caractérisé en ce que le moyen de commande de pivotement du balancier est constitué par une bielle télescopique (400) reliant un appendice (430) du balancier (12) à un bras (436) d'un levier (433) qui est articulé sur un appendice (435) du caisson rigide (10), l'autre bras (437) de ce levier (433) étant relié à la structure d'aéronef par l'intermédiaire d'une bielle associée (438).

9. Train d'atterrissage selon la revendication 1 ou la revendication 2, caractérisé en ce que le moyen de commande de pivotement du balancier est constitué par une bielle télescopique (500) à système intégré (545) de commande hydraulique d'allongement ou de raccourcissement, reliant un appendice (530) du balancier (12) à un appendice (543) du caisson rigide (10).

10. Train d'atterrissage selon la revendication 9, caractérisé en ce que la bielle télescopique (500) inclut en outre un système oléo-pneumatique de secours (550) permettant, en cas de panne hydraulique, de faire pivoter le balancier (12) par action d'un poussoir interne associé (553).

11. Train d'atterrissage selon la revendication 1 ou la revendication 2, caractérisé en ce que le moyen de commande de pivotement du balancier est constitué par un vérin hydraulique (600) intégré dans l'amortisseur (15), ledit amortisseur comportant à cet effet une tige télescopique (661) équipée intérieurement d'une tige-piston (670) et d'un organe de verrouillage associé (673), laquelle tige-piston est accrochée sur un appendice (17) du balancier (12).
